(19) Europäisches Patentamt / European Patent Office / Office européen des brevets

(11) **EP 4 365 556 A1**

(12) **EUROPEAN PATENT APPLICATION**

(43) Date of publication:
08.05.2024 Bulletin 2024/19

(51) International Patent Classification (IPC):
**G01D 5/14** (2006.01)

(21) Application number: **23203922.2**

(22) Date of filing: **16.10.2023**

(52) Cooperative Patent Classification (CPC):
**G01D 5/145;** G01D 2205/773

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.11.2022 IN 202211063127**

(71) Applicant: Honeywell International Inc.
**Charlotte, NC 28202 (US)**

(72) Inventors:
- **JERRED, John P.**
  **Charlotte, 28202 (US)**
- **PANDEY, Abhinav**
  **Charlotte, 28202 (US)**
- **SANCHIHAR, Paresh**
  **Charlotte, 28202 (US)**

(74) Representative: **Haseltine Lake Kempner LLP**
**Cheapside House**
**138 Cheapside**
**London EC2V 6BJ (GB)**

(54) **OFF-AXIS ANGLE POSITION SENSOR USING ARRAY OF SPIRAL MAGNET AND METHOD OF USING THE SAME**

(57)     Various embodiments are directed to an angle position sensor system for detecting angle position of a movable member along a defined path comprising: an arc magnet array (200) defining an arc path and configured to be coupled to the movable member. The arc magnet array comprising at least two magnetized pole layers (210, 215) arranged in a spiral pattern and having a tilt angle ($\Theta_N$). A magnetic field sensor (230) disposed proximate to the arc magnet array and movable relative to the magnetic field sensor. The magnetic field sensor configured to generate one or more periodic position signals having N number of periods per arc cycle along the arc path. The magnetic field sensor configured to transmit the one or more periodic position signals to a controller associated with the movable member. The angle position of the movable member is determined based at least in part on the one or more periodic position signals.

FIG. 2

EP 4 365 556 A1

**Description**

FIELD OF THE INVENTION

Various embodiments described herein relate generally to position detector devices and systems, and more particularly to position detector devices and systems for determining the angle position of a movable member along a defined path.

BACKGROUND

It is often desirable in many applications to identify the position of a movable member of a device. Particularly, in some examples and in many industries, it is critical to identify the precise/absolute angle position of certain movable members within a defined range. For example, in the Aerospace industry, aircraft wings include flaps that are mounted thereon. These flaps are designed to move along a curved path within a defined range (often less than 180°) and are used to control the lift and drag of an aircraft during take-off and landing based at least in part on the angle position of these flaps. Applicant has identified many technical challenges and difficulties associated with current solutions for precise/absolute angle position of certain movable members within a defined range. Through applied effort, ingenuity, and innovation, many of these identified problems have been solved by developing solutions that are included in embodiments of the present disclosure, many examples of which are described in detail herein.

BRIEF SUMMARY

Various embodiments described herein relate to angle position sensor systems and methods for using the same. Various embodiments are directed to an angle position sensor system for detecting angle position of a movable member along a defined path, comprising: an arc magnet array defining an arc path and configured to be coupled to the movable member, the arc magnet array comprising at least two magnetized pole layers arranged in a spiral pattern and having a tilt angle; and a magnetic field sensor disposed proximate to the arc magnet array, wherein: the arc magnet array is movable relative to the magnetic field sensor, the magnetic field sensor is configured to generate one or more periodic position signals having N number of periods per arc cycle along the arc path defined by the arc magnet array, the N number of periods is based at least in part on the tilt angle of the arc magnet array, the magnetic field sensor is configured to transmit the one or more periodic position signals to a controller associated with the movable member, and the angle position of the movable member is determined based at least in part on the one or more periodic position signals.

In various embodiments, the arc magnet array may comprise alternating magnetic polarities.

In various embodiments, the arc magnet array may have an arc angle that is less than or equal to 180°.
In various embodiments, the arc magnet array may have an arc angle that is greater than 180°.
In various embodiments, the magnetic field sensor may maintain a substantially constant air gap with respect to the arc magnet array. In various embodiments, the air gap is less than 3mm.
In various embodiments, the magnetic field sensor may be configured to be fixed relative to the arc magnet array.
In various embodiments, the angle position may be absolute angle position.
In various embodiments, the at least two magnetized pole layers may have the same width.
In various embodiments, the arc magnet array may comprise seven magnetized pole layers, each having a 72° pole turn angle.
In various embodiments, the arc magnet array may comprise two magnetized pole layers, each having a 180° pole turn angle.
In various embodiments, the arc magnet array may comprise two magnetized pole layers, each having a pole turn angle that is greater than 180°.
In various embodiments, the magnetic field sensor may be positioned proximate to an upper side surface of the arc magnet array, wherein the upper side surface comprises the at least two magnetized pole layers.
In various embodiments, the movable member may move along a curved path.
In various embodiments, the magnetic field sensor may comprise a magneto-resistive sensor.
In various embodiments, the arc magnet array may be located in a magnet carrier.
Various embodiments are directed to a method for determining angle position of a movable member along a defined path, the method comprising: causing an arc magnet array coupled to the movable member to move relative to a magnetic field sensor, wherein the magnetic field sensor is configured to generate one or more periodic position signals having N number of periods per arc cycle along a arc path defined by the arc magnet array; and determining, based at least in part on the one or more periodic position signals generated by the magnetic field sensor, the angle position of the movable member along the defined path of the movable member.
In various embodiments, the arc magnet array may comprise at least two magnetized pole layers arranged in a spiral pattern and having a tilt angle.
In various embodiments, the defined path of the movable member may be a curved path.
In various embodiments, determining the angle position of the movable member may comprise calculating an arctangent based at least in part on the one or more periodic position signals.

BRIEF DESCRIPTION OF THE DRAWINGS

Reference will now be made to the accompanying drawings, which are not necessarily drawn to scale, and wherein:

Figure 1 schematically illustrates an exemplary angle position sensor system in accordance with various embodiments of the present invention.
Figure 2 depicts a perspective view of an exemplary arc magnet array in accordance with various embodiments of the present invention.
Figure 3 depicts a perspective view of an exemplary planar 2D surface multipole magnet track in accordance with various embodiments of the present invention.
Figures 4A-4D depict plan views of exemplary arc magnet array in accordance with various embodiments of the present invention.
Figures 5A and 5B depict exemplary sinusoidal magnetic field data in accordance with various embodiments of the present invention.
Figure 6A and 6B depict results of an experimental simulation in accordance with various embodiments of the present invention.
Figure 7 illustrates an exemplary apparatus for implementing various embodiments of the present disclosure.
Figure 8 depicts an example process flow chart for angle position detection for a movable member in accordance with various embodiments of the present invention.

DETAILED DESCRIPTION

The present disclosure more fully describes various embodiments with reference to the accompanying drawings. It should be understood that some, but not all embodiments are shown and described herein. Indeed, the embodiments may take many different forms, and accordingly this disclosure should not be construed as limited to the embodiments set forth herein. Rather, these embodiments are provided so that this disclosure will satisfy applicable legal requirements. Like numbers refer to like elements throughout.

It should be understood at the outset that although illustrative implementations of one or more aspects are illustrated below, the disclosed systems, and methods may be implemented using any number of techniques, whether currently known or not yet in existence. The disclosure should in no way be limited to the illustrative implementations, drawings, and techniques illustrated below, but may be modified within the scope of the appended claims along with their full scope of equivalents. While values for dimensions of various elements are disclosed, the drawings may not be to scale.

The words "example," or "exemplary," when used herein, are intended to mean "serving as an example, instance, or illustration." Any implementation described herein as an "example" or "exemplary embodiment" is not necessarily preferred or advantageous over other implementations.

Described herein are example devices, systems, and methods for determining the angle position of a movable member. An exemplary angle position sensor system may be configured for use with a movable member whose required movement describes a defined path (e.g., an arc, curve, semicircle, etc.). Particularly, in various embodiments, an exemplary angle position sensor system as described herein is configured to determine absolute angle position of a movable member along a path (e.g., movement path) of the movable member, and may be designed (e.g., customized) to meet various angle position sensing requirements (e.g., various angle position sensing ranges).

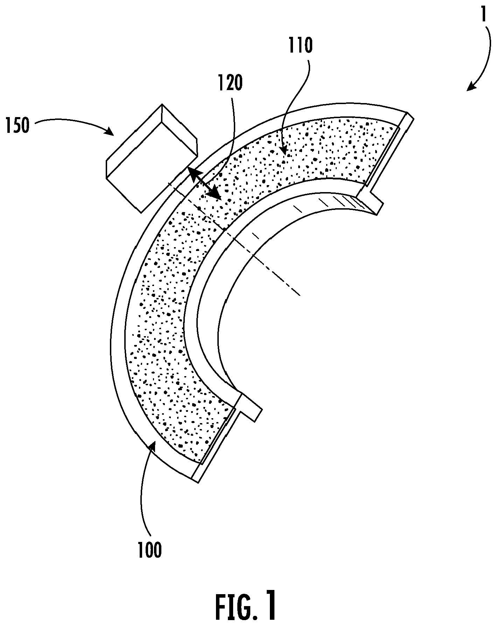

Figure 1 schematically depicts an exemplary angle position sensor system 1 according to various embodiments of the present invention. In various embodiments, an exemplary angle position sensor system 1 comprises a magnet assembly 100 and at least one magnetic field sensor 150. In various embodiments, the magnet assembly 100 may define and/or otherwise comprise an arc shape. In various embodiments, the magnet assembly 100 and the at least one magnetic field sensor 150 are configured to be positioned (e.g., during operation) relative to one another such that the position (e.g., angle position) of the magnet assembly 100 relative to the at least one magnetic field sensor 150 may be determined based at least in part on an output signal generated by the at least one magnetic field sensor 150 corresponding to the direction of the magnetic field generated by the magnet assembly 100 along a surface of the magnet assembly, wherein the position of the magnet assembly 100 may be determined based at least in part on the noted output signals. In some embodiments, the magnet assembly 100 may be operable and/or configured to move relative to the at least one magnetic field sensor 150, wherein the magnet assembly 100 may be configured to be movable and the at least one magnetic field sensor 150 may be configured to be substantially stationary (e.g., the at least one magnetic field sensor 150 may be configured to be fixed relative to the magnet assembly 100). In some embodiments, the at least one magnetic field sensor 150 may be operable and/or configured to move relative to the magnet assembly 100, wherein the magnetic field sensor 150 may be configured to be movable and the magnet assembly 100 may be configured to be substantially stationary (e.g., the magnet assembly 100 may be configured to be fixed relative to the at least one magnetic field sensor 150).

In an example embodiment, the magnet assembly 100 may be operable and/or configured to be coupled (e.g., fixed, mounted, and/or the like) to a movable member, and the at least one magnetic field sensor 150 may be operable and/or configured to be positioned proximate to a surface 110 of the magnet assembly 100 and configured to be substantially stationary (e.g., configured to be fixed to a non-movable member), such that the at least one magnetic field sensor 150 is fixed relative to the movement of the magnet assembly 100. In this manner, as the movable member moves, the magnet assembly 100 may move/travel relative to the at least one magnetic field sensor 150, wherein the at least one magnetic field sensor 150 may be configured to generate an output signal (e.g., one or more periodic position signals) that corresponds to and/or otherwise may be used to determine the angle position of the magnetic field sensor 150 relative to the path defined by the magnet assembly 100 (e.g., within the path defined by the magnet assembly 100). In various embodiments, the angle position of the at least one magnetic field sensor 150 relative to the path defined by the at least one magnetic field sensor 150 may correspond to and/or otherwise may be used to determine the angle position of the movable member along a defined path of the movable member. For example, in the noted example embodiment, the defined path of the movable member may comprise a shape that is substantially the same as the shape of the path defined by the magnet assembly 100.

In another example embodiment, the at least one magnetic field sensor 150 may be operable and/or configured to be coupled (e.g., fixed, mounted, and/or the like) to a movable member and positioned proximate to a surface 110 of the magnet assembly 100, such that as the movable member moves along a defined path, the at least one magnetic field sensor 150 moves/travels relative to the magnet assembly 100 (e.g., along the path defined by the shape of the magnet assembly 100), wherein the at least one magnetic field sensor 150 may be configured to generate an output signal (e.g., one or more periodic position signals) that correspond to and/or otherwise may be used to determine the angle position of the at least one magnetic field sensor 150 relative to the path defined by the magnet assembly 100 (e.g., within the path defined by the magnet assembly 100). In various embodiments, the angle position of the at least one magnetic field sensor 150 relative to the path defined by the magnet assembly 100 may correspond to and/or otherwise may be used to determine the angle position of the movable member along a defined path of the movable member. For example, in the noted example embodiment, the defined path of the movable member may comprise a shape that is substantially the same as the shape of the path defined by the magnet assembly 100.

In various embodiments, the at least one magnetic field sensor 150 may be configured to transmit the one or more periodic signals generated by an exemplary magnetic field sensor (such as the at least one magnetic field sensor 150) to a controller associated with the movable member.

In various embodiments, the magnet assembly 100 and the least one magnetic field sensor 150 are configured to be positioned relative to and proximate to one another, such that the magnet assembly 100 and the least one magnetic field sensor 150 do not come in contact with each other at least during relative movement (e.g., as the magnet assembly 100 moves relative to a stationary at least one magnetic field sensor 150 in some embodiments, or as the at least one magnetic field sensor 150 moves relative to a stationary magnet assembly 100 in some embodiments). In various embodiments, the magnet assembly 100 and the least one magnetic field sensor 150 may be configured to be positioned relative to and proximate to one another, such that the distance between the at least one magnetic sensor 150 and the magnet assembly 100 define an air gap 120, wherein the magnet assembly 100 and the at least one magnetic field sensor 150 are operable and/or configured to maintain the air gap 120 (e.g., at least substantially maintain the air gap 120) during relative movement with respect to the magnet assembly 100 and the at least one magnetic field sensor 150.

In an example embodiment, the magnet assembly 100 and the at least one magnetic field sensor 150 may be configured to be positioned relative to and proximate to one another, such that the at least one magnetic field sensor 150 faces the surface 110 of the magnet assembly 100 and such that the at least one magnetic field sensor 150 and the magnet assembly 100 have a distance between them, wherein the distance may be an air gap 120. Additionally, in various embodiments, the magnet assembly 100 and the at least one magnetic field sensor 150 may be operable and/or configured to maintain the air gap 120 (e.g., at least substantially maintain the air gap 120) during relative movement, where as noted above, relative movement may describe movement of the magnet assembly 100 relative to a substantially stationary at least one magnetic field sensor 150 in some embodiments, or movement of the at least one magnetic field sensor 150 relative to a substantially stationary magnet assembly 100 in some embodiments).

In various embodiments, the magnet assembly 100 (e.g., surface 110 of the magnet assembly 100) comprises different regions of magnetic polarity, such that during relative movement, the at least one magnetic field sensor 150 passes over varying/changing magnetic fields (e.g., varying changing magnetic field direction) generated by the magnet assembly 100.

In various embodiments, the at least one magnetic field sensor 150 may be configured to generate an output signal (e.g., an analog voltage) that corresponds to the varying/changing magnetic field in the vicinity of the at least one magnetic field sensor 150. In various embodiments, the at least one magnetic field sensor 150 may be configured to generate an output signal that comprises one or more periodic position signals (e.g., sine and cosine signals) based at least in part on the varying/changing magnetic field (e.g., changing magnetic field direction) along the path defined by the magnet assembly 100 (e.g., along the surface 110 of the magnet assembly 100). For example, in various embodiments, the output signal comprises at least sine and cosine signals, wherein the sine and cosine signals are periodic position signals. In various embodiments, an exemplary magnetic field sensor 150 may be configured to generate periodic position signals having N number of periods per arc cycle (as described further below). In various embodiments, the at least one magnetic field sensor 150 comprises a magneto-resistive sensor configured to generate one or more periodic position signals (e.g., sine and cosine signals) having N number of periods as described above. Specifically, in various embodiments, the magnetic field sensor 150 may be an anisotropic magnetoresistance sensor, which may be sensitive to a magnetic field that is parallel to the plane in which the magnetoresistance sensor lies.

In some embodiments, the at least one magnetic field sensor 150 may include two interleaved or overlaid magneto-resistive (MR) Wheatstone bridge sensors. The two MR bridge sensors may be offset by 45 degrees with respect to one another, and the differential signals of these two MR bridge sensors (via comparators or operational amplifiers) may advantageously produce separate sine and cosine signals (e.g., periodic position signals phase shifted by 90 degrees) as noted above. The sine and cosine signals generated by the two MR bridges tilted 45 degrees with respect to one another may be the result of relative movement (as described above), wherein the MR bridges pass over the magnet assembly 100 having varied magnetic fields along the path of the magnet assembly 100 (e.g., along the arc shaped surface 110 of the magnet assembly 100 in the depicted example embodiment of Figure 1). In various embodiments, these sine and cosine signals may allow for extraction of the angle position of the magnetic field sensor within the path defined by the magnet assembly 100, wherein the extracted angle position of the magnetic field sensor may be indicative of the position of a corresponding movable member along a defined path of the movable member. For example, in the depicted example embodiment of Figure 1, a magnetic field sensor 150 may be configured to generate sine and cosine signals that allow for extraction of the angle position of the magnetic field sensor within the arc path defined by the magnet assembly 100, wherein the extracted angle position of the magnetic field sensor may be indicative of the position of a corresponding movable member along a defined path (e.g., curved path) of the movable member. In some embodiments, the sine and cosine signals (e.g., periodic position signals) may allow for extraction of the angle position based at least in part on applying an arctangent function to the sine and cosine signals to extract the angle position of the magnetic field sensor 150, wherein the extracted angle position, as described above, may be indicative of the angle position of a corresponding movable member with respect to which an exemplary arc magnetic assembly or the at least one magnetic field sensor 150 is coupled.

In various embodiments, the magnet assembly 100 comprises an arc-shaped magnet array (referred to herein as an arc magnet array) having a plurality of tilted (e.g., angled) magnetized pole layers adjacent from one another and orientated/arranged in a spiral pattern. For example, in various embodiments, the arc-shaped magnet array comprises and/or otherwise defines a multipole arc magnet array formed based at least in part on a spiral pattern orientation/arrangement. In some embodiments, the magnet assembly 100 may additionally comprise a housing (not shown) configured to house the arc magnet array therein. For example, in some embodiments, at least a portion of the magnet assembly 100 may be disposed within a housing, such as a magnet case (not shown). In some embodiments, the magnet assembly 100 may not include a housing (e.g., the magnet assembly 100 may comprise an arc magnet array that is not disposed with a housing).

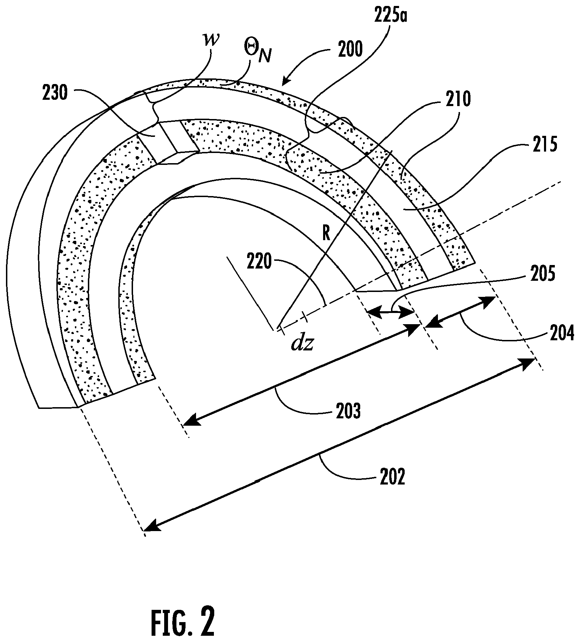

Figure 2 depicts a perspective view of an exemplary arc magnet array 200. The exemplary arc magnet array 200 of Figure 2 is a multipole arc magnet array that includes a plurality of magnetized tilted pole layers having a tilt angle $\theta_N$ and positioned adjacent to one another, such that the magnetized tilted pole layers are oriented in a spiral pattern (e.g., spiral shape). In this manner and in various embodiments, at least a surface of the arc magnet array 200 may comprise a spiral pole pattern. In various embodiments, the magnetized tilted pole layers comprise north and south pole layers (e.g., north and south magnetize pole layers). In various embodiments, the arc magnet array 200 having a spiral pattern (e.g., spiral pole pattern), as shown in Figure 2 may define an arc having an arc angle (e.g., arc measure). For example, in some embodiments, the arc magnet array 200 may have an arc angle that is less than or equal to 180°. In some embodiments, the arc magnet array 200 may have an arc angle that is greater than 180°. In various embodiments, the arc magnet array 200 may be a radial arc magnet array with a spiral pole pattern and having an outer diameter 202, an inner diameter 203, a radial thickness 204, and an axial thickness 205.

As shown in Figure 2, the arc magnet array 200 may be formed of north pole layers 210 and south pole layers 215 that are positioned adjacent to one another and spiral inwards towards a center axis 220 of the arc magnet array 200. For example, the radius of each pole layer relative to the center axis 220 may be monotonically increasing (clockwise direction) or decreasing (counterclockwise direction), such that the north and south pole layers 210 and 215 are monotonically disposed (e.g., located or positioned in an outward spiral) relative to the center axis as a function of the radial angle (e.g., the radial width-wise mid-point of each layer may be distributed monotonically as a function of the radial angle relative to the center axis 220), as well as the distance $d_z$ along the center axis 220. Each north pole layer 210 and south layer 215 alternate as the radial distance from the center axis 220 increases.

As shown, in Figure 2, the exemplary arc magnet array 200 has an upper side surface 225a having a pole pattern (e.g., north and south spiral pole pattern) characterized at least in part by pole count and pole turn angle (described further below), wherein pole count may describe the number of alternating north and south pole layers spanning the upper surface 225a of the arc magnet array, and wherein pole turn angle may describe the degree of turn per pole layer relative to the center axis 220 (e.g., the point at which at a pole layer tapers off into infinitesimal slices moving along, for example (counter) clockwise, the upper surface 225a of the arc magnet array). In various embodiments, the pole pattern of an exemplary arc magnet array as described herein may be based at least in part on the tilt angle of the north and south pole layers 210, 215 and/or the width of the pole layers 210, 215 (e.g., north and south pole widths). In various embodiments, the tilt angle may correspond to the pole turn angle. For example, in various embodiments, the tilt angle of the pole layers may depend on the pole turn angle of the pole layers. Additionally and/or alternatively, in various embodiments, the pole pattern of may be based at least in part on the arc angle, outer diameter 202, inner diameter 203, radial thickness 204, and/or axial thickness 205 of the arc magnet array 200. In various embodiments, the spiral pole pattern is an Archimedean spiral that is generally defined as r = a + b·θ$^{(1/c)}$, where r is the radius at a given angle θ (e.g., amount of rotation of the radius), a is the starting location of the spiral at the inner diameter, b is the tilt angle, and c describes the growth rate/shape of the radius.

In various embodiments, the arc angle, outer diameter 202, inner diameter 203, radial thickness 204, and/or axial thickness 205 may be selected based at least in part on the desired pole pattern (e.g., spiral pattern) of the arc magnet array 200, wherein the desired pole pattern may be based at least in part on a desired and/or required angle position sensing range of the angle position sensor system 1. For example, in various embodiments, an exemplary arc magnet array according to various embodiments of the present invention may have a spiral in a number of pole counts (e.g., 2, 6, 8, and/or the like) to the desired and/or required angle position sensing range (e.g., moving clockwise or counterclockwise along the alternating and adjacent north and south pole layers of the arc magnet array.

In some embodiments, the arc angle, the outer diameter 202, the inner diameter 203, the radial thickness 204, and/or the axial thickness 205 of an exemplary arc magnet array (such as arch magnet array 200) as described herein may be selected based at least in part on the desired position sensing range, wherein the pole pattern may be selected based at least in part on the desired angle position sensing range. For example, the position sensing range of an exemplary angle position sensor system 1 may be 0° - 180°. As another example, the position sensing range of an exemplary angle position sensor system 1 may be 0° - 145°. As yet, another example, the position sensing range of an exemplary angle position sensor system 1 may be 0° - 129°. In various embodiments, an exemplary arc magnet array may define an arc shape with an arc angle that is not less than the desired/required angle position sensing range. In some embodiments, an exemplary arc magnet array may define an arc shape with an arc angle that is at least greater than the desired/required angle position sensing range. It should be understood that an exemplary angle position sensor system 1 as described herein may be configured to have a position sensing range that is different from the examples given above.

In various embodiments, the arc magnet array 200 generates varying/changing magnetic field (e.g., changing varying/changing magnetic field direction) across a surface (e.g., upper side surface 225a) of the arc magnet array 200 based at least in part on the pole pattern (e.g., alternating tilted north and south poles layers). A magnetic field sensor 230 (e.g., similar to the at least one magnetic field sensor 150) may be located proximate the upper side surface 225a of the arc magnet array 200, such that at least a portion of the magnetic field sensor 230 may be placed within the varying/changing magnetic field generated by the arc magnet array 200 as the magnet array 200 (e.g., with the upper side surface 225a of the magnet array facing the magnetic field sensor 230) moves (e.g., clockwise or counterclockwise) relative to the magnetic field sensor 230.

In various embodiments, the magnetic field sensor 230 may be configured to be located proximate to the upper side surface 225a of the magnet array 200 such that the magnetic field sensor 230 and the magnet array 200 define an air gap (e.g., the distance between the magnetic field sensor 230 and the arc magnet array 200 define an air gap). Additionally, in various embodiments, the magnetic field sensor 230 and the arc magnet array 200 may be positioned/oriented relative to one another such that the magnetic field sensor 230 and the arc magnet array 200 substantially maintain the air gap as the magnet array 200 moves relative to the magnetic field sensor 230 (or as the arc magnetic field sensor 230 moves relative to the magnet array 200 in some embodiments). In various embodiments, the air gap may have a measured value that is based at least in part on the field strength of the magnet array. In an example embodiment, the air gap may be 3mm or less. It should be understood, however, that in other embodiments, the air gap may be larger than 3mm.

In various embodiments, the magnetic field sensor 230 may be configured to determine, based at least in part on the varying/changing magnetic field along the arc path of the upper side surface 225a of the arc magnet array 200 depicted in Figure 2, the angle position of the magnetic field sensor 230 within the arc path defined by the arc magnet array 200. For example, in various embodiments, as the magnet array 200 moves/travels relative to the magnetic field sensor 230 (e.g., with the upper side surface 225a of the arc magnet array 200 facing the magnetic field sensor 230), the magnetic field sensor 230 is placed within the varying/changing magnetic fields of the arc magnet array 200 (e.g., exposed to the varying/changing magnetic field direction generated by the arc magnet array 200 across the upper side surface 225a). In various embodiments, the magnetic field sensor 230 and the arc magnet array 200 (e.g., upper side surface 225a thereof) substantially maintain an air gap during the relative movement (e.g., as the magnetic field sensor 230 moves relative to the arc magnet array 200 in some embodiments, or as the arc magnet array 200 moves relative to the magnetic field sensor 230 in some embodiments).

In some embodiments, the arc magnet array 200 may be configured to be coupled (fixed, mounted, and/or the like) to a movable member and proximate to the magnetic field sensor 230, such that as the movable member moves, the arc magnet array 200 moves relative to the magnetic field sensor 230 with the upper side surface 225a (having alternating north and south pole layers) facing the magnetic field sensor 230, while substantially maintaining a constant air gap (as described above) with respect to the magnetic field sensor 230. In various embodiments, the magnetic field sensor 230 may be configured to be utilized to determine the angle position of the movable member based at least in part on the angle position of the magnetic field sensor 230 within the arc path defined by the arc magnet array 200. In the noted example embodiments, the magnetic field sensor 230 may be configured to be substantially stationary (e.g., configured to be fixed to a non-movable member, such that the magnetic field sensor 230 may be fixed relative to the arc magnet array 200).

In some embodiments, the magnetic field sensor 230 may be configured to be coupled (fixed, mounted, and/or the like) to a movable member and proximate to the arc magnet array 200, such that as the movable member moves, the magnetic field sensor 230 moves along the varying/changing magnetic field generated by the arc magnet array 200, wherein the varying/changing magnetic field may be based at least in part on the magnetized north and south pole pattern of the upper side surface 225a of the magnet array 200. In various embodiments, the magnetic field sensor 230 may be configured to be utilized to determine the angle position of the movable member based at least in part on the angle position of the magnetic field sensor 230 relative to the arc magnet array 200. In the noted example embodiments, the arc magnet array 200 may be configured to be substantially stationary (e.g., configured to be fixed to a non-movable member, such that the at arc magnet array 200 may be fixed relative to the magnetic field sensor 230).

In various embodiments to determine the angle position of the magnetic field sensor 230 relative to the arc magnet array 200, the magnetic field sensor 230 generates one or more periodic position signals (e.g., sine and a cosine output signals) that may be used to determine the angle position of the magnetic field sensor (and thus the angle position of the movable member), wherein the angle position may represent the absolute angle position of the magnetic field sensor 230 and/or the movable member. In various embodiments, the magnetic field sensor 230 is configured to transmit the one or more periodic position signals to a controller associated with the movable member, wherein the controller may be configured to determine the angle position of the movable member based at least in part on the one or more periodic position signals.

As noted above, in various embodiments, a magnetic field sensor may be configured to generate one or more periodic position signals (e.g., sine and cosine output signals) based at least in part on the varying/changing magnetic field in the vicinity of the magnetic field sensor during relative movement with respect to the magnetic field sensor and the exemplary magnet assembly comprising an arc magnet array (such as arc magnet array 200). In various embodiments, the magnetic field generated by the arc magnet array 200 may vary in a sinusoidal and/or cosinusoidal fashion based at least in part on the tilt angle $\theta_N$ of the north and south pole layers. In various embodiments, the periods of the periodic positional signal (e.g., sine and cosine periods) may be based at least in part on the tilt angle $\theta_N$, thus enabling the periodic positional signal to be customized/configurable.

In various embodiments, the magnetic field sensor 230 may be configured to generate $N$ number of periods per arc cycle (e.g., $N$ sine and cosine periods per arc cycle) along the path defined by the magnetic field sensor, wherein an arc cycle may describe relative movement with respect to the arc magnet array 200 and the magnetic field sensor 230 (clockwise or counterclockwise), as described above, wherein the magnetic field sensor passes over an arc length of the arc magnet array (e.g., from a defined first portion of the arc magnet array 200 to a defined second portion of the arc magnet array 200). In some embodiments the first portion and the second portion may describe a first end and a second end of the arc magnet array 200.

In various embodiments, the relative path of the magnetic field sensor 230 with respect to the upper side surface 225a of the arc magnet array 200 may be described with reference to an exemplary planar two-dimensional (2D) surface multipole magnet track has described herein. The topology of a surface (e.g., upper side surface) of an exemplary arc magnet array according to various embodiments of the present invention may have a topology that is similar (e.g., resembles) the topology of the exemplary 2D surface multipole magnet track (described below), such that the relative path of an exemplary magnetic field sensor with respect to an exemplary arc magnet array (such as arc magnet array 200) may resemble the relative path of a magnetic field sensor relative to the 2D surface multipole magnet track.

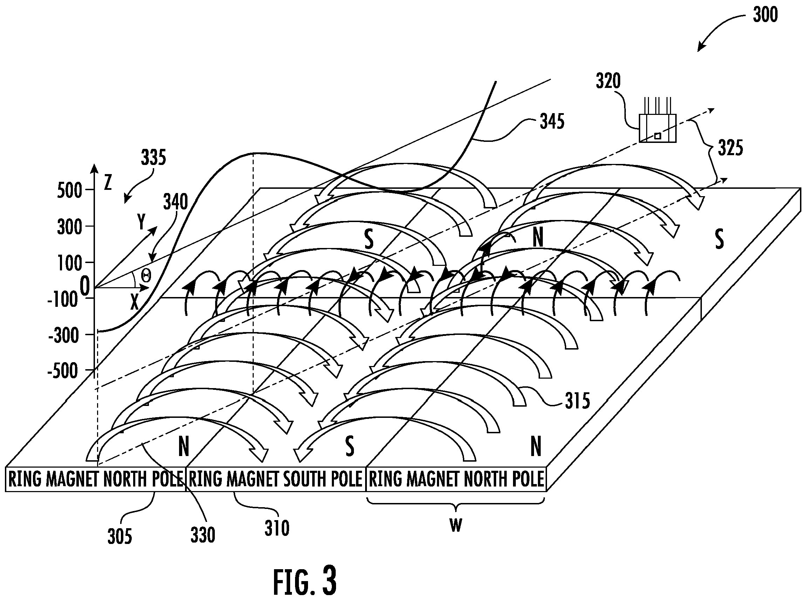

Figure 3 depicts a perspective view of an exemplary planar 2D surface multipole magnet track 300 having alternating north and south poles, wherein the north and south poles have the same width w. As shown in Figure 3, the exemplary 2D surface multipole magnet track 300 include north poles 305 and south poles 310 that are adjacent to one another. The alternating north and south poles 305, 310 generate magnetic field lines 315 that originate from the north poles 305 and terminate at the south poles 310. Near the center of each pole 305 and 310, the magnetic field lines 315 are substantially orthogonal to the plane defined by the 2D surface multipole magnet track 300. For example, near the center of the north poles 305, the magnetic field lines 315 point upward and normal to the plane of the 2D surface multipole magnet track 300. Near the center of the south poles 310, the magnetic field lines point downward and normal to the plane of the 2D surface multipole magnet track 300.

A magnetic field sensor 320 (such as magnetic field sensor 150) located proximate to the 2D surface multipole magnet track 300 (e.g., above the 2D surface multipole magnet track 300) may move/travel along a path 330 relative to the 2D surface multipole magnet track 300. The magnetic field sensor 320 may move along the x and y axis of coordinate axis 335 defined with respect to the multipole magnet track 300, wherein the x-axis is defined by movement right or left relative to the multipole magnet track 300, the y-axis is defined by movement forward and backward relative to the multipole magnet track 300, and the z-axis is defined by movement up and down relative to the multipole magnet track 300. The path 330 of the magnetic field sensor 320 is a substantially straight line that lies in a plane defined by the x and y axes for a constant z value above the multipole magnet track 300 (e.g., the path 330 of the magnetic field sensor 320 does not vary along the z-axis). The line of the path 330 makes an angle θ 340 with respect to the x-axis.

The magnetic field sensor 320 generates an output signal 345 (e.g., sine signal and/or cosine signal) based at least in part on the relative movement (e.g., constant movement) of the magnetic field sensor 320 with respect to the 2D surface multipole magnet track 300 along the path 330. In various embodiments, the period $P_\theta$ of the sinusoidal signal 345 may be based at least in part on (e.g., dependent in part upon) the period $p$ of the pole pattern (e.g., north and south poles 305 and 310), wherein the pole pattern may be based at least in part on the width w of the north and south poles 305, 310, as well as the angle θ 340 the path 330 makes with respect to the x-axis. For example, the period $P_\theta$ may be determined/selected based at least in part on equation 1:

$$P_\theta = \frac{w}{\cos \theta} \ (1)$$

As noted above, the relative path (e.g., path of the magnetic field sensor 230 with respect to the arc magnet array 200 as the arc magnet array moves relative to the magnetic field sensor) may resemble the relative path 330 of the magnetic field sensor 320 with respect to the 2D surface multipole magnet track 300 as described above. Accordingly, an exemplary magnetic field sensor moving/traveling along a surface of an exemplary arc magnet array having adjacent and alternating tilted magnetized north and south pole pattern according to various embodiments described herein may generate an output signal (e.g., sine and/or cosine signal) based at least in part on the relative movement. In some embodiments, the relative movement may be a constant movement. Further, the period of the sinusoidal signal may be based at least in part on (e.g., dependent in part upon) the period of the pole pattern, wherein the period of the pole pattern may be based at least in part on the width w of the north and south pole layers thereof and/or the tilt angle. For example, in various embodiments, linear displacement of a magnetic field sensor with respect to an exemplary arc magnet array tilted at an angle θ may generate a sine signal with a period $P$ that may depend on the value of $\theta_N$ (e.g., tilt angle).

In various embodiments, the tilt angle of an exemplary arc magnet array as described herein may be selected and/or adjusted to create an N period sinusoidal signal per arc cycle along the arc magnet array (e.g., from a first defined end of the arc magnet array to a second defined end of the arc magnet array). In various embodiments, the tilt angle of an exemplary arc magnet array may be selected to create N periods per cycle along the exemplary arc magnet array based at least in part on the pole width and the outer radius R.

While Figure 2 depicts an exemplary arc magnet array 200 with three magnetized pole layers, an exemplary arc magnet array according to various embodiments of the present invention may have less than three magnetized pole layers or more than three magnetized pole layers, and an exemplary magnetic field sensor located proximate to a surface of the noted exemplary arc magnet array may have a relative path that resembles the path 330 of the 2D surface multipole magnet track 300 as described above. Further, as noted above, an exemplary arc magnet array 200 has described herein may be characterized by the pole pattern of the upper side surface 225a of the arc magnet array 200 and/or the pole turn angle (which may correspond to the tilt angle). In various embodiments, the pole turn angle and the pole count number can be adjusted and/or selected to create N periods per arc cycle of an exemplary arc magnet array to obtain an on off-axis angle position sensor system 1 with absolute position measurement within each of these N periods.

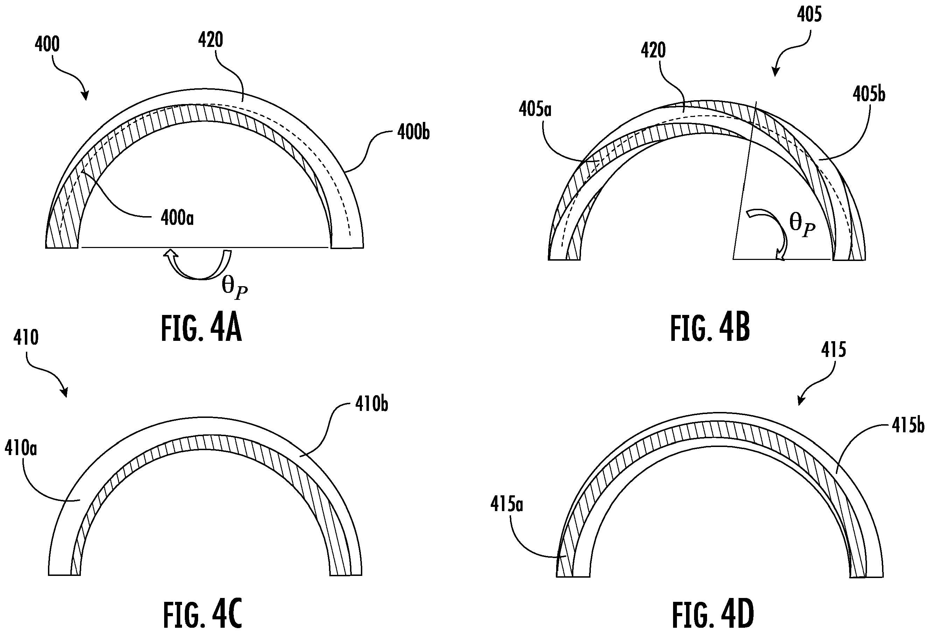

In some embodiments, an exemplary arc magnet array comprises at least two magnetized poles layers. Figures 4A - 4D depict plan views of exemplary arc magnet arrays (similar to Figure 2) having different pole counts (e.g., number of pole layers) and different pole turn angles (e.g., degree of turn per pole). The plan views of Figures 4A-4D illustrate an upper side surface of an exemplary arc magnet array (e.g., similar to the upper side surface 225a of the exemplary arc magnet array 200 depicted in Figure 2 but with different pole patterns).

The illustrated exemplary arc magnet array 400 of Figure 4A is a "two pole" arc magnet array 400 with a 180° pole turn angle $\theta_P$. The exemplary arc magnet array 400 is formed of adjacent tilted and alternating north and south magnetized pole layers 400a, 400b having the same width w being tapered off into infinitesimal slices moving along the arc magnet array 400. Each pole makes a 180° turn moving clockwise or counterclockwise along the arc magnet array 400. As shown in Figure 4A, the depicted exemplary arc magnet array 400 comprises two magnetized pole layers.

The illustrated exemplary arc magnet array 405 of Figure 4B is a "seven pole" arc magnet array 405 with a 72° pole turn angle $\theta_P$. The exemplary arc magnet array 405 is formed of adjacent and alternating tilted north and south magnetized pole layers 405a, 405b having the same width w being tapered off into infinitesimal slices moving along the arc-shaped magnet array 405. Each pole makes a 72° turn moving clockwise or counterclockwise along the arc magnet array 405. As shown in Figure 4B, the depicted exemplary arc magnet array 405 comprises seven magnetized pole layers.

The illustrated exemplary arc magnet array 410 of Figure 4C is a "two pole" arc magnet array 410 having a pole turn angle between 180° and 360°. The exemplary arc magnet array 410 is formed of adjacent and alternating north and south magnetized pole layers 410a, 410b having the same width w. Each pole makes D° turn moving (counter) clockwise along the arc magnet array 410, wherein D is between 180° and 360°. As shown in Figure 4C, the depicted exemplary arc magnet array 410 comprises two magnetized pole layers.

The illustrated exemplary arc magnet array 415 of Figure 4D is a "two pole" arc magnet array 415 with a 360° pole turn angle. The exemplary arc magnet array 415 is formed of adjacent and alternating north and south magnetized pole layers 415a, 415b having the same width w. Each pole makes a 360° turn moving clockwise or counterclockwise along the arc magnet array 415. As shown in Figure 4D, the depicted exemplary arc magnet array 415 comprises two magnetized pole layers. It should be understood that an exemplary arc magnet array as described herein is not limited to the pole count and pole turn angle configurations of the examples provided in FIGS. 4A-4D. In various embodiments, an exemplary arc magnet array may comprise pole count and pole turn angle that is different from the examples of FIGS. 4A-4D. For example, an exemplary arc magnet array may comprise 8 magnetized pole layers, 10 magnetized pole layers, and/or the like. As another example, an exemplary arc magnet array may comprise 45° pole turn angle, 60° pole turn angle, and/or the like.

In various embodiments, the pole turn angle $\theta_P$ may correspond to the tilt angle $\theta_N$. In various embodiments, the pole turn angle and the pole count (e.g., number of adjacent and alternating south and north pole layers) can be adjusted and/or selected) to create N periods per one complete movement cycle (one arc cycle) of an exemplary arc magnet array to obtain an off-axis angle position sensor system with absolute position measurement within each of these N periods. For example, the dashed line 420 around the arc magnet array of FIGS. 4A and 4B may represent the relative displacement of a magnetic field sensor with respect to the respective exemplary arc magnet array 400 and 405. For example, as the arc magnet array (e.g., 400A-400D moves relative to a magnetic field sensor, the magnetic field sensor may measure the magnetic field in the local vicinity of the dashed line 420 depicted in Figures 4A and 4B for illustration. This magnetic field may vary in a sinusoidal and/or cosinusoidal fashion due to the non-zero tilt angle of the pole layers of the arc magnet array. Further, this may result in the magnetic field sensor generating an output signal with a specific number of periods per movement cycle (e.g., arc cycle) along the arc magnet array.

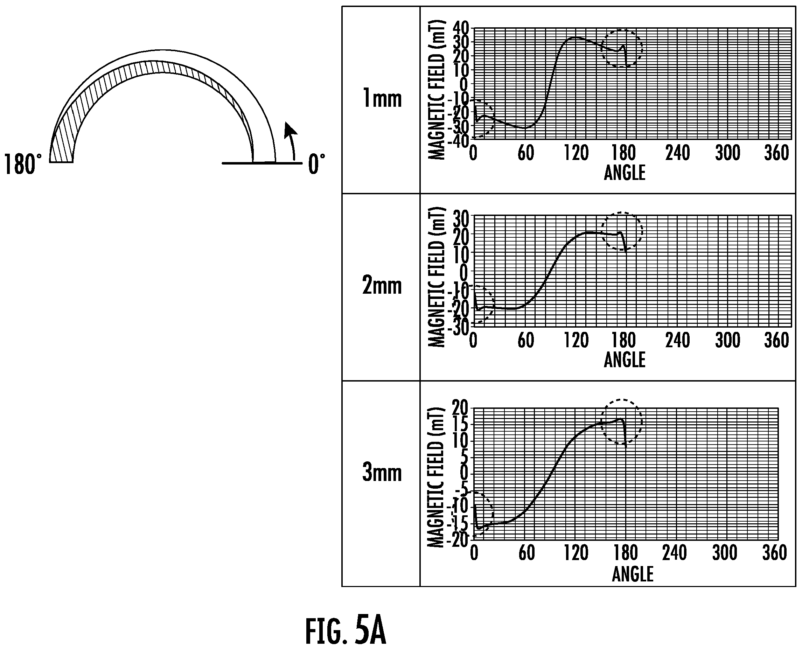

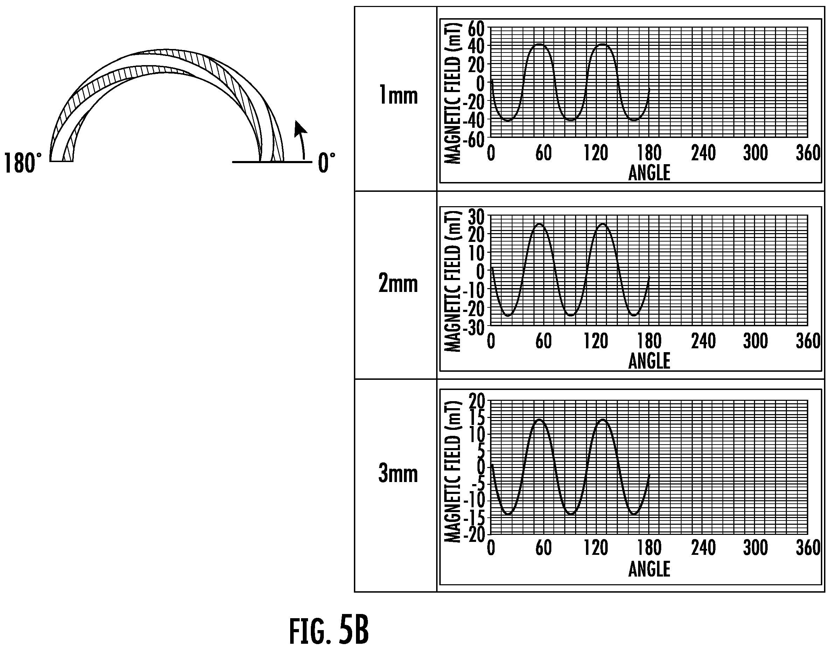

Figures 5A and 5B show exemplary sinusoidal magnetic field data for the illustrated exemplary arc magnet array 400 of Figure 4A and the exemplary arc magnet array 405 of Figure 4B respectively. As shown in Figures 5A and 5B, the arc magnet array configurations of Figures 4A and 4B produce sinusoidal signals having different number of periods. In some embodiments, for arc magnet arrays with fewer poles (e.g., two poles), it is contemplated that a margin of error is provided (e.g., angle margin may be added at each of the opposite ends of the arc magnet array with respect to the desired position sensing range). In an example embodiment, the margin error may be ±10°. For example, in the noted example embodiment, given a 0° - 130° position sensing range, the arc angle of the arc magnet array may be 150°. In various embodiments, the output signal of an exemplary magnetic field sensor according to various embodiments may comprise sinusoidal magnetic field data and/or be generated based at least in part on the sinusoidal magnetic field data. For example, in some embodiments, an output signal of an exemplary magnetic field sensor according to various embodiments may comprise a normalized sinusoidal magnetic field data and/or normalized cosinusoidal magnetic field data.

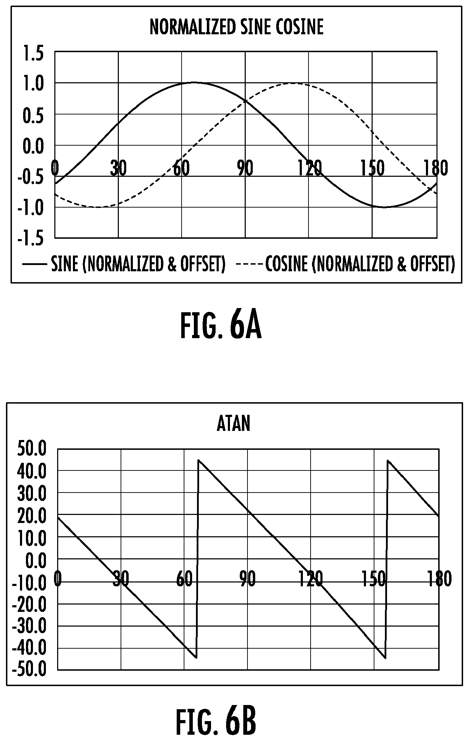

Figure 6A and 6B depict results of an example experimental simulation conducted to verify the effectiveness of embodiments as described herein. In the simulation configuration, an exemplary magnet assembly comprising an exemplary arc magnet array (as described herein) with the following configuration was used for the simulation.

| Number of Poles | 2 |
|---|---|
| Outer Diameter (mm) | 39 |
| Inner Diameter (mm) | 60 |
| Radial Thickness (mm) | 10.5 |

(continued)

| Axial Thickness (mm) | 1 |
|---|---|
| Air gap (mm) | 1.8 |

Figure 6A shows an example sine and cosine output signals corresponding to an output of the selected exemplary magnetic field sensor for one arc cycle along the exemplary arc magnet array, while Figure 6B shows a processed output signal generated, utilizing an arctangent function, based at least in part on the sine and cosine output signals of Figure 6A, wherein the angle position may be extracted/determined from the processed output signal. For example, in some embodiments, the angle position of a movable member may be extracted/determined based at least in part on applying an arctangent function to the one or more periodic position signals.

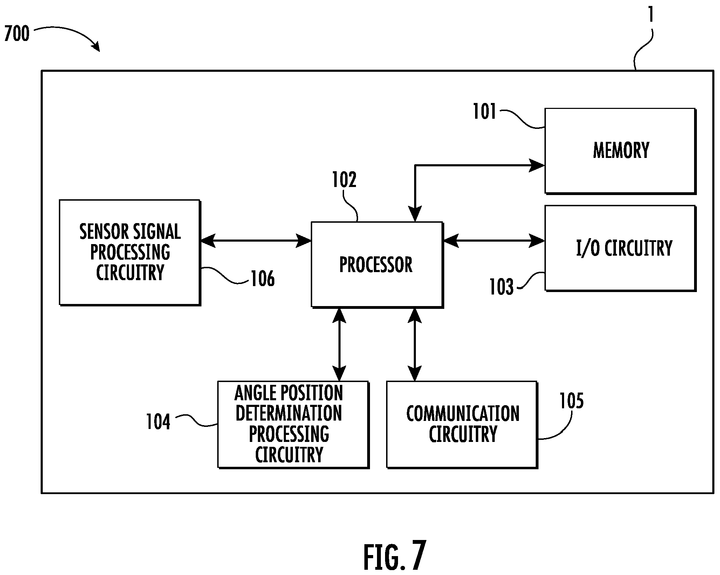

In various embodiments, the angle position sensor system 1 may be communicably coupled to one or more controllers, such as controller 700 depicted in FIG. 7. In various embodiments, the controller 700 may be associated with a movable member. A non-limiting example of a movable member may include an aircraft flap component, wherein the angle position sensor system 1 may be used to determine the position (e.g., absolute angle position) of the aircraft flap component and/or other components that may be coupled to the aircraft flap component. As depicted in Figure 7, the controller 700 may comprise a memory 101, a processor 102, input/output circuitry 103, communication circuitry 105, sensor signal processing circuitry 106, and angle position determination circuitry 104. The controller 700 may be configured to execute one or more of the various operations described herein. Although the components are described with respect to functional limitations, it should be understood that the particular implementations necessarily include the use of particular hardware. It should also be understood that certain of the components described herein may include similar or common hardware. For example, two sets of circuitry may both leverage use of the same processor, network interface, storage medium, or the like to perform their associated functions, such that duplicate hardware is not required for each set of circuitry. The use of the term "circuitry" as used herein with respect to components of the controller 700 should therefore be understood to include particular hardware configured to perform the functions associated with the particular circuitry as described herein.

The term "circuitry" should be understood broadly to include hardware and, in some embodiments, software for configuring the hardware. For example, in some embodiments, "circuitry" may include processing circuitry, storage media, network interfaces, input/output devices, and the like. In some embodiments, other elements of the controller 700 may provide or supplement the functionality of particular circuitry. For example, the processor 102 may provide processing functionality, the memory 101 may provide storage functionality, the communications circuitry 105 may provide network interface functionality, and the like.

In some embodiments, the processor 102 (and/or co-processor or any other processing circuitry assisting or otherwise associated with the processor) may be in communication with the memory 101 via a bus for passing information among components of the apparatus. The memory 101 may be non-transitory and may include, for example, one or more volatile and/or non-volatile memories. For example, the memory 101 may be an electronic storage device (e.g., a computer readable storage medium). In various embodiments, the memory 101 may be configured to store information, data, content, applications, instructions, or the like, for enabling the apparatus to carry out various functions in accordance with example embodiments of the present disclosure. It will be understood that the memory 101 may be configured to store partially or wholly any electronic information, data, data structures, embodiments, examples, figures, processes, operations, techniques, algorithms, instructions, systems, apparatuses, methods, look-up tables, or computer program products described herein, or any combination thereof.

The processor 102 may be embodied in a number of different ways and may, for example, include one or more processing devices configured to perform independently. Additionally or alternatively, the processor may include one or more processors configured in tandem via a bus to enable independent execution of instructions, pipelining, and/or multithreading. The use of the term "processing circuitry" may be understood to include a single core processor, a multi-core processor, multiple processors internal to the apparatus, and/or remote or "cloud" processors.

In an example embodiment, the processor 102 may be configured to execute instructions stored in the memory 101 or otherwise accessible to the processor. Alternatively, or additionally, the processor may be configured to execute hard-coded functionality. As such, whether configured by hardware or software methods, or by a combination thereof, the processor may represent an entity (e.g., physically embodied in circuitry) capable of performing operations according to an embodiment of the present disclosure while configured accordingly. Alternatively, as another example, when the processor is embodied as an executor of software instructions, the instructions may specifically configure the processor to perform the algorithms and/or operations described herein when the instructions are executed. For example, in various embodiments, the processor 102 may comprise drive circuitry. For example, the drive circuitry may be configured to generate a signal defined at least in part by one or more predetermined signal characteristics, such as, for example, a signal frequency.

In some embodiments, the controller 700 may include input-output circuitry 103 that may, in turn, be in communication with the processor 102 to provide output to the user and, in some embodiments, to receive input such as a command provided by the user. The input-output circuitry 103 may comprise a user interface, such as a graphical user interface (GUI), and may include a display that may include a web user interface, a GUI application, a mobile application, a client device, or any other suitable hardware or software. In some embodiments, the input-output circuitry 103 may also include a display device, a display screen, user input elements, such as a touch screen, touch areas, soft keys, a keyboard, a mouse, a microphone, a speaker (e.g., a buzzer), a light emitting device (e.g., a red light emitting diode (LED), a green LED, a blue LED, a white LED, an infrared (IR) LED, an ultraviolet (UV) LED, or a combination thereof), or other input-output mechanisms. The processor 102, input-output circuitry 103 (which may utilize the processing circuitry), or both may be configured to control one or more functions of one or more user interface elements through computer-executable program code instructions (e.g., software, firmware) stored in a non-transitory computer-readable storage medium (e.g., memory 101). Input-output circuitry 103 is optional and, in some embodiments, the controller 700 may not include input-output circuitry. For example, where the controller 700 does not interact directly with the user, the controller 700 may generate user interface data for display by one or more other devices with which one or more users directly interact and transmit the generated user interface data to one or more of those devices. For example, the controller 700, using user interface circuitry may generate user interface data for display by one or more display devices and transmit the generated user interface data to those display devices.

The communications circuitry 105 may be a device or circuitry embodied in either hardware or a combination of hardware and software that is configured to receive and/or transmit data from/to a network and/or any other device, circuitry, or module in communication with the system 1. For example, the communications circuitry 105 may be configured to communicate with one or more computing devices via wired (e.g., USB) or wireless (e.g., Bluetooth, Wi-Fi, cellular, and/or the like) communication protocols.

In various embodiments, the processor 102 may be configured to communicate with the sensor signal processing circuitry 106. The sensor signal processing circuitry 106 may be a device or circuitry embodied in either hardware or a combination of hardware and software that is configured to receive, process, generate, and/or transmit data, such as output signal data (e.g., periodic position signal data) generated by a magnetic field sensor. For example, in various embodiments, the sensor signal processing circuitry 106 may be configured to at least receive, process, and/or transmit output signal data (e.g., periodic position signal data) generated by a magnetic field sensor according to various embodiments of the present invention. In various embodiments, the sensor signal processing circuitry 106 may be configured to communicate with one or more magnetic field sensors, such that the one or more magnetic field sensors may communicate (e.g., transmit) generated periodic position signal data to the sensor signal processing circuitry 106, and the sensor signal processing circuitry 106 may receive the transmitted periodic position signal data. In various embodiments, the output signal data received by the sensor signal processing circuitry 106 may include, for example, magnetic field data generated from one or more magnetic field sensors, wherein the magnetic field data may comprise and/or may be processed (e.g., by the one or more magnetic field sensors) to generate periodic position signals (e.g., sine and/or cosine output signal) data corresponding to an arc cycle (e.g. one complete movement cycle) along a corresponding arc magnet array of an exemplary magnet assembly as described herein.

In various embodiments, the sensor signal processing circuitry 106 may be configured to execute one or more signal analysis processes. For example, the sensor signal processing circuitry 106 may be configured to perform various signal processing functions on the respective output signals from a magnetic field sensor. For example, the sensor signal processing circuitry 106 may perform stochastic filtering, sampling, digital signal processing, statistical operations, spectral analysis, time-frequency/series analysis, thresholding, digital to analog (D/A) conversion, analog to digital (D/A) conversion, and/or data transformation. In some embodiments, the sensor signal processing circuitry 106 may convert analog signals received from a magnetic field sensor into digital signals.

In various embodiments, the sensor signal processing circuitry 106 may be configured to execute one or more of the operations described herein at two or more instances, so as to facilitate the receiving, processing, generating, and/or transmitting of output signal data at various instances (e.g., runtimes) over time. In various embodiments, the sensor signal processing circuitry 106 may be configured to store at least a portion of the resultant data corresponding to one or more of the operations described herein as historical system data that, for example, may be associated with one or more instances (e.g., an installation instance, a particular runtime). In such an exemplary circumstance, the sensor signal processing circuitry 106 may be configured to access at least a portion of the historical system data (e.g., via the memory 101) in order to facilitate the execution of one or more operations described herein.

In various embodiments, the processor 102 may be configured to communicate with the angle position determination circuitry 104. The angle position determination circuitry 104 may be a device or circuitry embodied in either hardware or a combination of hardware and software that is configured to execute an angle position detection operation of an exemplary angle position sensor system as described herein. In various embodiments, the angle position determination circuitry 104 may be configured to determine the position of a movable member along a defined path (e.g., at a particular instance), as described herein, based at least in part on the output signal produced by a magnetic field sensor in response to relative movement with respect to the magnetic field sensor and an exemplary magnet assembly (e.g., arc magnet array thereof). In various embodiments, the angle position determination circuitry 104 may be configured to communicate with the sensor signal processing circuitry 106 (e.g., via processor 102), wherein the angle position determination circuitry 104 may be configured to receive output data generated by the sensor signal processing circuitry 106, wherein the received sensor signal processing circuitry output data may comprise output signal data transmitted by a magnetic field sensor to the sensor signal processing circuitry 106. In various embodiments, the sensor signal processing circuitry output data may be processed output signal data from a magnetic field sensor, wherein the sensor signal processing circuity 106 may be configured to process the output signal data from a magnetic field sensor (e.g., as described above). As described herein, the angle position determination circuitry 104 may be configured to accurately determine the absolute angle position of a movable member along a path of the movable member based at least in part on the output signal produced by a magnetic field sensor in response to relative movement with respect to the magnetic field sensor and an exemplary magnet assembly (e.g., arc magnet array thereof). In various embodiments, the path of the movable member may comprise a curved path (e.g., a defined curved path).

As a non-limiting example described in further detail herein, the angle position determination circuitry 104 may be configured to determine a angle position (e.g., angle position data), based at least in part on processed output signal data received from the sensor signal processing circuitry 106 and corresponding to output signal of a magnetic field sensor, wherein the output signal may be generated based at least in part on exposure of the magnetic field sensor to varying/changing magnetic fields of an exemplary magnet assembly (e.g., exemplary arc magnet array thereof) during relative movement with respect to the magnetic field sensor and the magnet assembly. Alternatively and/or additionally, the angle position determination circuitry 104 may be configured to retrieve various historical system configuration data stored in the memory 101, including stored data corresponding to an installation instance.

In some embodiments, the angle position determination circuity 104 may be configured to transmit angle position data of a movable member to one or more control systems associated with the movable member, wherein the angle position data may be indicative of the position of the movable member along a path of the movable member, and wherein the angle position data may be used to control various operations and/or parameters of the movable member and/or components, devices, systems, and/or the like that may be associated with the movable member.

In some embodiments, the angle position determination circuitry 104 may be configured to transmit analog angle position data of a movable member. In some embodiments, the angle position determination circuitry 104 may be configured to transmit digital angle position data for a movable member. In some embodiments, the angle position determination circuitry 104 may be configured to transmit data that may include processed periodic position signal data (e.g., sine and/or cosine signal data) and/or angle position data for a movable member. In various embodiments, the angle position data may be generated based at least in part on the periodic position signal. For example, in various embodiments, the angle position data for a movable member may be generated based at least in part on determining (e.g., calculating) the arctangent of the periodic position signal data generated by a magnetic field sensor in response to relative movement with respect to the magnetic field sensor and an exemplary magnet assembly, wherein the noted relative movement may be based at least in part on movement of the movable member along a path of the movable member. In various embodiments, the angle position determination circuity may be configured to translate the angle position data for a movable member into a control output signal that may be transmitted to a control system associated with the movable member, such that the control system may control one or more parameters (e.g., speed, movement, position, and/or the like) of the movable member and/or other components, devices, and/or the like associated with the movable member. In some embodiments, the angle position determination circuitry 104 may be configured to convert digital signal to an analog signal. In some embodiments, the angle position determination circuitry 104 may be configured to convert analog signal to digital signal.

In various embodiments, the angle position determination circuitry 104 may be configured to execute one or more of the operations described herein at two or more instances, so as to facilitate the determination of various angle position various instances (e.g., runtimes) over time. In various embodiments, the angle position determination circuitry 104 may be configured to store at least a portion of the resultant data corresponding to one or more of the operations described herein as historical system data that, for example, may be associated with one or more instances (e.g., an installation instance, a particular runtime). In such an exemplary circumstance, the angle position determination circuitry 104 may be configured to access at least a portion of the historical system data (e.g., via the memory 101) in order to facilitate the execution of one or more operations described herein.

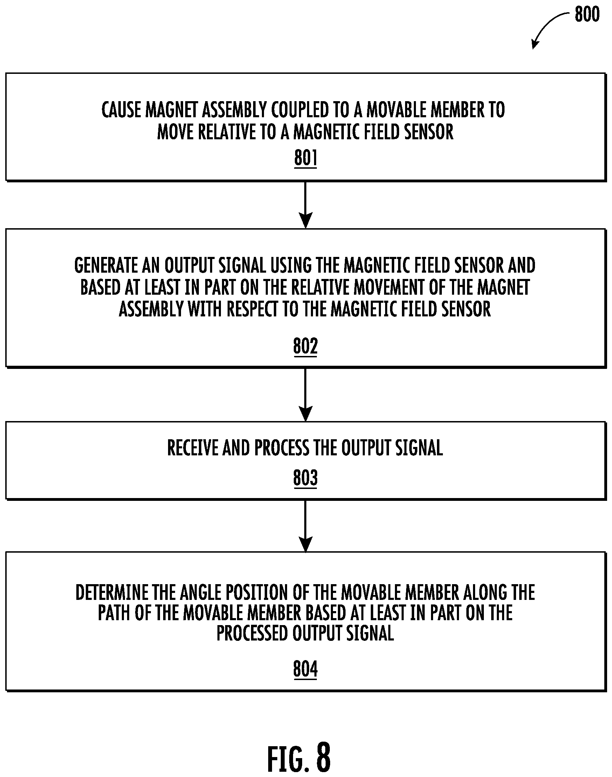

Figure 8 depicts an example process 800 of an example method of determining the angle position of a movable member according to one or more embodiments of the present invention. The process that is depicted in Figure 8 may begin at step/operation 801, when a magnet assembly (such as magnet assembly 100 comprising an arc magnet array) coupled to the movable member is caused to move/travel relative to a magnetic field sensor (such as magnetic field sensor 150, 230). In some embodiments, a controller (such as controller 700) may cause the magnet assembly (e.g., comprising an arc magnet array) to move relative to the magnetic field sensor. For example, a controller (such as controller 700) may cause the magnet assembly to move relative to the magnetic field sensor based at least in part by causing the movable member to move. Additionally and/or alternatively, in some embodiments, one or more other controllers may cause the magnet assembly to move.

In various embodiments, as precursor steps, the magnet assembly may be coupled to the movable member and the magnetic field sensor may be positioned relative to the magnetic assembly, such that the magnetic field sensor is disposed proximate to the magnet assembly and faces a surface of the magnet assembly having alternating magnetic polarities (e.g., alternating north and south magnetic poles of the arc magnet array thereof). Additionally, the magnetic field sensor and the magnet assembly may be positioned and/or orientated relative to each other, such that the magnetic field sensor and the magnet assembly define an air gap (e.g., the distance between the magnetic field sensor and the magnet assembly may define an air gap). In various embodiments, the movable member moves along the path (e.g., arc path) defined by the magnet assembly (e.g., arc magnet array thereof), such that the magnetic field sensor and the magnet assembly are not in contact with each other, wherein the magnetic field sensor may be configured to generate one or more periodic signals in response to movement of the magnetic assembly (e.g., magnet array thereof) relative to the magnetic field sensor. In various embodiments, the magnetic field sensor may be configured to generate one or more periodic position signals having N number of periods per arc cycle along the arc path defined by the magnet assembly (e.g., arc magnet array of the magnet assembly).

In various embodiments, the relative movement of the magnetic field sensor, with respect to the magnet assembly along a path defined by the magnet assembly may be based at least in part on movement of the movable member along a path (e.g., defined path) of the movable member, wherein the path of the movable member and the path defined by the magnet assembly may be similar. For example, in various embodiments, the path of the movable member and the path defined by the magnet assembly may be a curved path (e.g., an arc path).

At step/operation 802, an output signal is generated, using the magnetic field sensor and based at least in part on the relative movement with respect to the magnetic field sensor and the magnet assembly. In various embodiments, the magnetic field sensor may be configured to generate the output signal based at least in part on varying/changing magnetic fields generated by the magnet assembly and experienced by the magnetic field sensor during the noted relative movement. For example, the magnet assembly may generate varying/changing magnetic fields along the path of the magnet assembly (e.g., at least along the noted surface having alternating magnetic polarities), and the magnetic field sensor may pass through the varying magnetic fields during relative movement, with respect to the magnetic field sensor and the magnet assembly, in accordance with the path of the movable member. In some embodiments, generating the output signal (e.g., by the magnetic field sensor) may comprise translating the changing magnetic fields experienced by the magnetic field along the path defined by the magnet assembly into electrical signals, and generating the output signal based at least in part on the electrical signals. In various embodiments, the output signal may be an analog signal.

In various embodiments, the output signal generated by the magnetic field sensor may comprise one or more periodic position signals (e.g., sine and/or cosine signal) that may be used to determine the absolute angle position of the movable member within the path of the movable member. In various embodiments, the magnetic field sensor may transmit the generated output signal (periodic position signals) to a controller (such as controller 700) associated with the movable member. In some embodiments, the output signal may comprise analog output signal.

At step/operation 803, the controller, using a sensor signal processing circuitry of the controller, may receive the output signal (e.g., periodic position signal) transmitted by the magnetic field sensor and may be configured to execute one or more signal analysis processes. For example, the sensor signal processing circuitry may perform various signal processing functions on the received output signal from the magnetic field sensor. Examples of such signal processing functions that may be performed by the sensor signal processing circuitry of the controller may include stochastic filtering, sampling, digital signal processing, statistical operations, spectral analysis, time-frequency/series analysis, thresholding, digital to analog (D/A) conversion, analog to digital (D/A) conversion, and/or data transformation.

Additionally and/or alternatively, in some embodiments, the controller, using the sensor signal processing circuitry of the controller, may process the output signal received from the magnetic field sensor to generate sensor output data that comprise angle position data for the movable member. In some embodiments, processing the output signal may comprise extracting the angle position data for the movable member based at least in part on the output signal (e.g., periodic position signal comprising sine and cosine signals). In various embodiments, the controller, using the sensor signal processing circuitry, may extract the angle position data for the movable member based at least in part on generating (e.g., calculating) an arctangent of the periodic position signal using the sine and cosine signal data. In some embodiments, the controller may process the output signal to generate sensor output data comprising the angle position data for the movable member using an angle position determination circuitry of the controller. In some embodiments, the controller, using the sensor signal processing circuitry may transmit the processed output signal from the magnetic field sensor to the angle position determination circuitry of the controller, wherein in some embodiments, the processed output signal may comprise sensor output data comprising angle position data for the movable member, and wherein in some embodiments, the process output signal may not include the angle position data for the movable member.

At step/operation 804, the controller, using the angle position determination circuitry determines the angle position of the movable member along the path of the movable member (e.g., at a particular instance) based at least in part on the processed output signal received from the sensor signal processing circuitry of the controller (e.g., in examples where the signal processing circuitry is not configured to generate and/or extract the angle position data for the movable member). In various embodiments, to determine the position of the movable member along the path of the movable member, the controller, using the angle position determination circuitry may extract the angle position data for the movable member based at least in part on the received output signal, wherein the received output signal may comprise periodic position signals, such as sine and cosine signals corresponding to the varying/changing magnetic fields along a path defined by magnet assembly. In various embodiments, the controller, using the angle position determination circuitry, may extract the position data for the movable member based at least in part on determining (e.g., calculating) the arctangent of the periodic position signal using the sine and cosine periodic signals.

In some embodiments, the angle position determination circuity may be configured to transmit the determined angle position data for the movable member to one or more control systems associated with the movable member, wherein the angle position data may be used to control various operations and/or parameters of the movable member and/or components, devices, systems, and/or the like that may be associated with the movable member. For example, in some embodiments, the angle position determination circuity may be configured to translate the angle position data for a movable member into a control output signal that may be transmitted to a control system associated with the movable member, such that the control system may control one or more parameters (e.g., speed, movement, position, and/or the like) of the movable member and/or other components, device, and/or the like associated with the movable member.

Although various embodiments have been described with reference to the Figures, other embodiments are possible. For example, the arc magnet array may be configured such that the top surface and/or bottom surface thereof has a topology (e.g., pole pattern) that is similar to the upper side surface as shown in Figure 4A-4D, wherein the magnetic field sensor is located above the top surface and/or below the bottom surface, and may be configured to determine based at least in part on the varying magnetic field along the top surface and/or bottom surface (depending on the location of the magnetic field sensor), the angle position of a movable member coupled to the magnetic field sensor. In various embodiments, the magnetic field sensor may not be limited to a specific type of magnetic field sensor.

Some embodiments may include a device suitable as a replacement for a resolver to detect a position of a movable member. In some embodiments, the arc magnet array may define an arc of desired arc angle (e.g., arc measure), and comprise individually magnetized layers, each layer of the individually magnetized layers being adjacent to at least one oppositely magnetized layer. The individually magnetized layers may be oriented in a radial spiral relative to a center axis of the arc-shaped magnet, such that each layer in the individually magnetized layers is disposed at a radial distance from the center axis that increases as a function of increasing radial angle $\alpha$ relative to the center axis.

In various examples, at least one magnetic field sensor may be configurable to detect a changing magnetic field and/or changing direction of magnetic flux in response to a relative motion between the arc-shaped magnet assembly and the at least one magnetic field sensor. The at least one magnetic field sensor may be configurable to output a signal indicative of the angle position of a movable member with respect to which the magnetic field sensor is coupled and/or that may be used to determine the angle position of a movable member with respect to which the magnetic field sensor is coupled. The at least one magnetic field sensor may include two MR bridges rotated 45 degrees with respect to one another and disposed proximate to the arc magnet array, such that one MR bridge of the two MR bridges produces a sine signal and the other MR bridge of the two MR bridges produces a cosine signal when the arc magnet rotates/travels (e.g., at a constant angular velocity) relative to the magnetic field sensor.

In some examples, when the arc magnet array moves relative to the at least one magnetic field, along the arc path defined by the arc magnet array, the relative path of the magnetic field sensor with respect to consecutive individually magnetized layers may be at a translation angle $\theta$ greater than zero degrees and less than 90 degrees relative to the at least one magnetic field sensor.

Many modifications and other embodiments will come to mind to one skilled in the art to which this disclosure pertains having the benefit of the teachings presented in the foregoing descriptions and the associated drawings. Therefore, it is to be understood that the disclosure is not to be limited to the specific embodiments disclosed and that modifications and other embodiments are intended to be included within the scope of the appended claims. Although specific terms are employed herein, they are used in a generic and descriptive sense only and not for purposes of limitation.

**Claims**

1. An angle position sensor system for detecting angle position of a movable member along a defined path, comprising:

    an arc magnet array defining an arc path and configured to be coupled to the movable member, the arc magnet array comprising at least two magnetized pole layers arranged in a spiral pattern and having a tilt angle; and
    a magnetic field sensor disposed proximate to the arc magnet array, wherein:

    the arc magnet array is movable relative to the magnetic field sensor,
    the magnetic field sensor is configured to generate one or more periodic position signals having N number of periods per arc cycle along the arc path defined by the arc magnet array,
    the N number of periods is based at least in part on the tilt angle of the arc magnet array,
    the magnetic field sensor is configured to transmit the one or more periodic position signals to a controller associated with the movable member, and
    the angle position of the movable member is determined based at least in part on the one or more periodic position signals.

2. The angle position sensor system of claim 1, wherein the arc magnet array comprises alternating magnetic polarities.

3. The angle position sensor system of claim 1, wherein the arc magnet array has an arc angle that is less than or equal to 180°.

4. The angle position sensor system of claim 1, wherein the arc magnet array has an arc angle that is greater than 180°.

5. The angle position sensor system of claim 1, wherein the magnetic field sensor maintains a substantially constant air gap with respect to the arc magnet array.

6. The angle position sensor system of claim 1, wherein the magnetic field sensor is configured to be fixed relative to the arc magnet array and comprises a magneto-resistive sensor.

7. The angle position sensor system of claim 1, wherein the angle position is absolute angle position.

8. The angle position sensor system of claim 1, wherein the at least two magnetized pole layers have the same width.

9. The angle position sensor system of claim 1, wherein the arc magnet array comprises seven magnetized pole layers, each having a 72° pole turn angle.

10. The angle position sensor system of claim 1, wherein the arc magnet array comprises two magnetized pole layers, each having a 180° pole turn angle.

11. The angle position sensor system of claim 1, wherein the arc magnet array comprises two magnetized pole layers, each having a pole turn angle that is greater than 180°.

12. The angle position sensor system of claim 1, wherein the magnetic field sensor is positioned proximate to an upper side surface of the arc magnet array, wherein the upper side surface comprises the at least two magnetized pole layers.

13. The angle position sensor system of claim 1, wherein the movable member moves along a curved path.

14. The angle position sensor system of claim 1, wherein the arc magnet array is located in a magnet carrier.

15. A method for determining angle position of a movable member along a defined path, the method comprising:

    causing an arc magnet array coupled to the movable member to move relative to a magnetic field sensor, wherein the magnetic field sensor is configured to generate one or more periodic position signals having $N$ number of periods per arc cycle along a arc path defined by the arc magnet array; and
    determining, based at least in part on the one or more periodic position signals generated by the magnetic field sensor, the angle position of the movable member along the defined path of the movable member.

FIG. 1

**FIG. 2**

FIG. 3

FIG. 4A

FIG. 4B

FIG. 4C

FIG. 4D

EP 4 365 556 A1

FIG. 5A

FIG. 5B

## NORMALIZED SINE COSINE

— SINE (NORMALIZED & OFFSET) ---- COSINE (NORMALIZED & OFFSET)

# FIG. 6A

## ATAN

# FIG. 6B

**FIG. 7**

EP 4 365 556 A1

800

CAUSE MAGNET ASSEMBLY COUPLED TO A MOVABLE MEMBER TO
MOVE RELATIVE TO A MAGNETIC FIELD SENSOR
801

GENERATE AN OUTPUT SIGNAL USING THE MAGNETIC FIELD SENSOR AND
BASED AT LEAST IN PART ON THE RELATIVE MOVEMENT OF THE MAGNET
ASSEMBLY WITH RESPECT TO THE MAGNETIC FIELD SENSOR

802

RECEIVE AND PROCESS THE OUTPUT SIGNAL
803

DETERMINE THE ANGLE POSITION OF THE MOVABLE MEMBER ALONG THE
PATH OF THE MOVABLE MEMBER BASED AT LEAST IN PART ON THE
PROCESSED OUTPUT SIGNAL

804

FIG. 8

Europäisches
Patentamt

European
Patent Office

Office européen
des brevets

# EUROPEAN SEARCH REPORT

Application Number

EP 23 20 3922

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/177603 A1 (HONEYWELL INT INC [US]) 19 September 2019 (2019-09-19) * paragraphs [0042], [0044]; figure 6b * * paragraph [0046]; figure 7 * * paragraph [0048] - paragraph [0050]; figures 8A, 8B * * abstract * * paragraph [0058] - paragraph [0063]; figure 9 * * paragraphs [0064], [0065], [0068], [0069]; figure 10 * | 1-15 | INV. G01D5/14 |
| X | FR 3 055 960 A1 (NTN SNR ROULEMENTS [FR]) 16 March 2018 (2018-03-16) * abstract * * page 1, line 1 - line 5 * * page 4, line 11 - page 6, line 23; figure 1 * * page 9, line 13 - page 10, line 2; figure 2 * | 1-15 | |
| X | US 2019/265073 A1 (DURET CHRISTOPHE [FR] ET AL) 29 August 2019 (2019-08-29) * abstract * * paragraph [0022] - paragraph [0043]; figures 1,2 * | 1-15 | TECHNICAL FIELDS SEARCHED (IPC) G01D G01B |

The present search report has been drawn up for all claims

| Place of search | Date of completion of the search | Examiner |
|---|---|---|
| Munich | 7 March 2024 | Jakob, Clemens |

EPO FORM 1503 03.82 (P04C01)

## ANNEX TO THE EUROPEAN SEARCH REPORT
## ON EUROPEAN PATENT APPLICATION NO.

EP 23 20 3922

This annex lists the patent family members relating to the patent documents cited in the above-mentioned European search report.
The members are as contained in the European Patent Office EDP file on
The European Patent Office is in no way liable for these particulars which are merely given for the purpose of information.

07-03-2024

| Patent document cited in search report | | Publication date | Patent family member(s) | | Publication date |
|---|---|---|---|---|---|
| WO 2019177603 | A1 | 19-09-2019 | CN | 111051819 A | 21-04-2020 |
| | | | CN | 115560783 A | 03-01-2023 |
| | | | EP | 3765823 A1 | 20-01-2021 |
| | | | EP | 4194816 A1 | 14-06-2023 |
| | | | US | 2020408856 A1 | 31-12-2020 |
| | | | US | 2022260653 A1 | 18-08-2022 |
| | | | US | 2023349988 A1 | 02-11-2023 |
| | | | WO | 2019177603 A1 | 19-09-2019 |
| FR 3055960 | A1 | 16-03-2018 | NONE | | |
| US 2019265073 | A1 | 29-08-2019 | CN | 110023720 A | 16-07-2019 |
| | | | EP | 3513149 A1 | 24-07-2019 |
| | | | FR | 3055959 A1 | 16-03-2018 |
| | | | JP | 7153012 B2 | 13-10-2022 |
| | | | JP | 2019526808 A | 19-09-2019 |
| | | | US | 2019265073 A1 | 29-08-2019 |
| | | | WO | 2018051011 A1 | 22-03-2018 |

EPO FORM P0459

For more details about this annex : see Official Journal of the European Patent Office, No. 12/82